# EUROPEAN PATENT SPECIFICATION

(11) **EP 2 604 584 B1**
(45) Date of publication and mention of the grant of the patent: **23.07.2014**
(21) Application number: 12159793.4
(22) Date of filing: 16.03.2012
(51) Int. Cl.: C03C 15/00, C03C 17/00

(54) **Method of manufacturing strengthened glass**
Verfahren zur Herstellung eines verstärkten Glases
procédé de fabrication de verre renforcé

(30) Priority: 16.12.2011 JP 2011276084
(43) Date of publication of application: 19.06.2013
(73) Proprietor: Micro Technology Co. Ltd., Tokyo 151-0063 (JP)
(72) Inventor: Yoshikawa, Minoru, Tokyo, Tokyo 151-0063 (JP)
(74) Representative: D'Halleweyn, Nele Veerle Trees Gertrudis

(56) References cited:
- WO-A1-2011/163450
- WO-A2-2012/027133
- JP-A- 2011 136 855
- TW-A- 201 121 911
- US-A- 4 911 743
- US-A1- 2011 183 116

## Description

### Technical Field

The present invention relates to a strengthened glass having strengthening layers disposed on both surfaces of a glass plate, more particularly, a strengthened glass capable of preventing damage such as fracture or the like due to micro-cracks or chipping generated when cutting the glass plate and capable of ensuring the strength against stress, a touch panel using the strengthened glass, and a method of manufacturing the strengthened glass.

### Background Art

In recent years, as to electronic apparatus such as smart phone, tablet-type terminal, vehicle navigation device or the like, there have been many products having a touch panel sold on the market. In general, the touch panel is formed by bonding a cover glass and an electrostatic sensor, wherein the cover glass is **characterized in that** it is desired to be as thin as possible while the strength against stress is high.

Strengthened glass is well-known as such a glass having high strength. The strengthened glass is a glass having compressive stress layers (strengthening layers) disposed on both surfaces of a glass plate to improve the strength and reduce the possibility of damage such as fracture or the like compared with a common glass. Also, in the case of manufacturing components such as the cover glass or the like in large scale using the strengthening glass, a large glass plate having strengthening layers disposed on both surfaces thereof is prepared and then is cut by a wheel cutter or laser to manufacture a plurality of separated strengthened glasses.

However, according to the method described above, numerous fine cracks (i.e., so-called micro-cracks or chipping, which is referred to as "micro-cracks or the like") are formed on a cutting surface of the separated strengthened glass, and damage such as fracture or the like may be caused due to stress concentrated at the micro-cracks or the like, acting as an important factor causing decrease in the strength of the strengthened glass. Therefore, in the related art, in order to maintain the strength of the strengthened glass, an etching process is performed on the cutting surface of the strengthened glass using a chemical liquid to etch, and thus, remove the micro-cracks.

However, the etching process must be performed on all of the cutting surfaces of the separated strengthened glass, including four side surfaces of the glass plate except for its front and back surfaces. Also, the chemical liquid used has a low concentration, and thus, a long time is taken to complete the etching process for removing the micro-cracks or the like. Furthermore, the concentration of the chemical liquid may be increased to shorten the process time, however, the increase in the concentration may result in not only a danger but also a strong etching reaction to form large irregularities on the cutting surface on which the etching process is performed. As such, the manufacturing method by means of a conventional strengthened glass has a problem that a long time is taken to perform the process for maintaining the strength of the strengthened glass after cutting the glass plate, greatly deteriorating the production efficiency.

Also, a method of cutting a large glass substrate after being etched is described in the following Patent Literature 1 as a method of preventing damage due to the stress generated in the strengthened glass. However, according to the method, after cutting the large glass substrate, protrusions remaining on edge portions of the substrate are removed by grinding the edge portions of the substrate, and then edge surfaces of the substrate is subjected to an etching process. Since the removing process and a plurality of etching processes are required, the process time gets longer and the production efficiency is degraded.

### Prior Art Document

### Patent Literature

[Patent document Literature 1]: Japanese Published Unexamined Application No. 2011-164508.

JP 2011 136855 A describes a method for producing a glass substrate where the production efficiency is enhanced and which has a uniform shape, raised glass strength and easy incorporation into a case. A substrate is subjected to a chemical strengthening treatment, wherein a compression stress layer is formed on the surface. After a desired processing treatment is carried out on the surface of the substrate, the substrate is cut along imaginary lines into individual glass substrates.

US 4 911 743 A describes a method of producing a strengthened glass. The techniques include various combination of operations including substantially reducing the thickness of a blank of raw material, preparing formed edges including chamfered edges, rounded edges, and undercut edges, super polishing all edges and surfaces of a glass item, tempering the glass either thermally, chemically or both, super polishing again after the tempering operation and etching the glass.

WO 2012/027133 A2 is prior art under Art. 54(3) EPC and describes a method of strengthening an edge of a glass article while maintaining the optical clarity of the major surfaces or protecting layers or structures deposited on the surfaces of the article. A protective coating or film of a polymer of polymer resin is applied to at least one surface of he glass article. The surface may either be melt-derived or polished, and/or chemically or thermally strengthened. The edge is etched with an etchant to reduce the size and number of flaws on the edge, thereby strengthening the edge.

US 2011/0183116 describes a preparatory tempered glass structure for a cutting treatment including a glass substrate and at least one trench. The glass substrate is given a strengthening treatment in to form, from a surface to the inside of the glass substrate, at least one compression stress layer and a tensile stress layer corresponding to the compression stress layer. The trench is formed in the compression stress layer of the glass substrate and overlaps a predetermined cutting path for the cutting treatment.

### Summary of Invention

### Problem to be solved by the invention

The present invention was made to solve the problem described above, and an object of the present invention is to shorten a process time for maintaining the strength of the strengthened glass to improve the production efficiency while substantially preventing damage such as fracture due to micro-cracks or the like generated when cutting a glass plate.

### Means for solving problem

The object may be achieved by the method of claim 1. The strengthened glass may comprise a glass plate; and strengthening layers disposed on both surfaces of the glass plate, wherein the glass plate includes a stepped portion formed at a periphery of the glass plate and having a protruding cutting surface, and the stepped portion has an interior side surface formed by an etching process and an exterior side surface formed by mechanical cutting.

According to the strengthened glass of the present invention, the exterior side surface of the stepped portion may be formed to have a curved shape, a light chamfer, or a straight edge. Also, a touch panel may be manufactured using the strengthened glass according to the present invention and a conductive film and an insulating film disposed on the glass plate.

Also, the object may be achieved by providing a method of manufacturing a strengthened glass, by which a large glass plate is separated to manufacture a plurality of strengthened glasses, comprising: a step of forming strengthening layers on both surfaces of the glass plate; a step of forming protection films in regions except for cutting portions of the glass plate on which the strengthening layers are formed; a step of forming recessed portions by etching both surfaces of the glass plate at the cutting portions of the glass plate not covered by the protection films; and a step of mechanically cutting the glass plate having the recessed portions formed thereon along the recessed portions, and forming a stepped portion at a periphery of the cut glass plate, the stepped portion having a protruding cutting surface.

Also, the object may be achieved by providing another method of manufacturing a strengthened glass, by which a large glass plate is separated to manufacture a plurality of strengthened glasses, comprising: a step of forming strengthening layers on both surfaces of the glass plate; a step of mechanically cutting the glass plate having the strengthening layers formed thereon; a step of forming protection films in a region except for a periphery of the cut glass plate; and a step of forming a stepped portion by etching both surfaces of the glass plate at the periphery of the glass plate not covered by the protection films, the stepped portion having a protruding cutting surface.

Here, the method of manufacturing a strengthened glass according to the present invention may further comprise a step of grinding an exterior side surface of the stepped portion to have a curved shape, a light chamfer, or a straight edge after the step of forming the stepped portion.

### Advantageous effects of invention

According to the present invention, in the cut strengthened glass, the stepped portion having the protruding cutting surface is formed at the periphery of the glass plate and has two side surfaces in different surface states, the interior side surface formed by the etching process and the exterior side surface formed by mechanical cutting. Therefore, stress against the strengthened glass is applied to the strengthening layers on both surfaces of the glass plate and absorbed by the strengthening layers, generation of micro-cracks on the interior side surface of the stepped portion adjacent to the strengthening layers may be prevented, and thus, facture due to the micro-cracks does not occur either. Also, even in a case where the exterior side surface of the stepped portion has micro-cracks or the like generated when cutting, since the stress applied to both surfaces of the glass plate will not accumulate at the micro-cracks or the like formed on the exterior side surface spaced apart from said both surfaces of the glass plate, it may be considered that there is no adverse effect on the strength. Therefore, according to the strengthened glass manufactured by the present inventive method, damage such as fracture due to micro-cracks or the like can be substantially prevented, and the strength against stress can be ensured.

Also, the etching process is performed on all of the cutting surfaces of the strengthened glass in the related method, while in the case of the present inventive method, the exterior side surface of the stepped portion is formed by cutting using a cutter such as a diamond cutter or the like, and thus, can be formed in a short time. Therefore, the present invention has effects as follows: the process time for maintaining the strength of the strengthened glass after cutting the glass plate is shortened greatly so that the production efficiency can be improved; and since the end surface of the stepped portion is formed by machining, it may be processed into any shape.

### Brief Description of Drawings

FIG. 1 is a plan view illustrating a glass plate for manufacturing the strengthened glass according to the present invention.
FIG. 2 is a cross-sectional view for explaining an example of a manufacturing process of the strengthened glass.
FIG. 3 is an enlarged cross-sectional perspective view illustrating the vicinity of a stepped portion of the strengthened glass according to the present invention.
FIG. 4 is a cross-sectional view for explaining a manufacturing process of the strengthened glass according to the present invention.

### Description of the reference numerals in the drawings:

1 glass plate
2 strengthening layer
3 protection film
4 cutting portion
5 exposure hole
6 photo mask
7 recessed portion
8 cutter
9 rotatable or rotating knife grinder
10 strengthened glass
11 stepped portion
12 interior side surface
13 exterior side surface

### Detailed Description of Invention

Hereinafter, modes for carrying out the present invention will be explained with reference to the attached drawings.

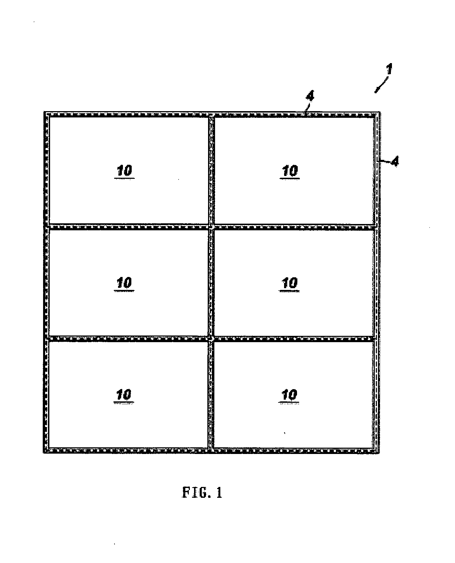

As shown in FIG. 1, a thin and large glass plate 1 is used, and a plurality of strengthened glasses 10, 10, .... are manufactured by separating a piece of glass plate 1 according to the present invention. The manufacturing method will be explained in a process order. Also, the drawings referred by the following description may not be drawn to scale, and characterizing parts will be illustrated while being enlarged compared with other parts for clarity of the structure.

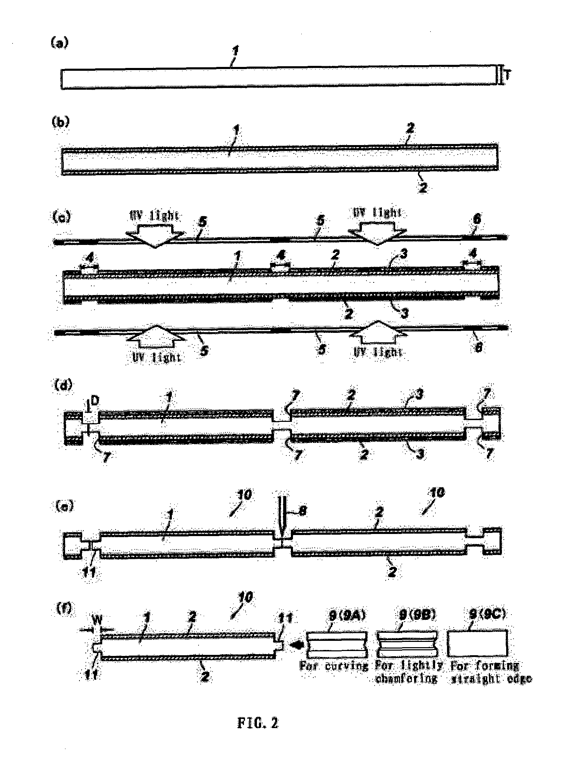

As shown in FIG. 2 (a), a thin and large glass plate 1 is prepared. The glass plate 1 has a plate thickness T which is not particularly limited, but preferred 0.4-1.0 mm considering workability and the requirement of being thin. Also, if the glass plate 1 has a thickness of 0.4 mm, the size of the glass plate 1 may be configured to be a square shape having a side length of 500 mm, and if the glass plate 1 has a thickness of 0.7 mm, the size of the glass plate 1 may be configured to be a square shape having a side length of 1 m. A size of the unprocessed glass plate 1 may be appropriately determined considering ease of handing relative to the plate thickness T.

Subsequently, as shown in FIG. 2 (b), a strengthening layer 2 is formed on the glass plate 1. An ion-exchange method (a method of forming a compressive stress layer by dipping the glass plate into an aqueous solution containing ions) or an air-cooled strengthening method (a method of forming a compressive stress layer by rapidly cooling the glass plate with air blow after heating) may be used to form the strengthening layer 2. In the current embodiment, strengthening layers 2 are formed on both front and back surfaces of the glass plate 1, thereby improving the strength of the glass plate 1 and reducing the possibility of damage such as fracture or the like compared with a common glass.

Subsequently, as shown in FIG. 2 (c), a protection film 3 is formed on the glass plate 1 on which the strengthening layer 2 is formed. The protection film 3 protects the glass plate 1 from being etched in a subsequent etching process, and the protection film 3 is limited to be formed in regions except for cutting portions 4 each having a width of about 0.05∼1.0mm as an outline of an product. The method for forming the protection film 3 may be the same as a common photolithography method, in which firstly transparent photoresist (photosensitive resin) is coated uniformly on a surface of the strengthening layer 2 and dried, then a photo mask 6 having exposure holes 5 is covered in the regions expect for the cutting portions 4, a pattern is printed by exposing the photoresist with irradiation of UV light, and then the printed pattern is developed using an alkali aqueous solution so that the protection film 3 is formed on the strengthening layer 2 by patterning. Protection films 3 are formed on both front and back surfaces of the glass plate 1. Also, the protection film 3 is peeled off after the etching process, and thus, a structure in which a peelable protection sheet is attached or a structure in which a protection film is printed may be employed instead of the structure in which the pattern is formed using the photoresist.

Subsequently, as shown in FIG. 2 (d), an etching process is performed on the cutting portions 4 of the glass plate 1 which are not covered with the protection film 3. The etching process may be a wet etching process performed by contact with a chemical liquid such as hydrofluoric acid or the like, and by this, the strengthening layer 2 and the glass plate 1 positioned at the cutting portions 4 are etched to form recessed portions 7 having a specific depth. Then, after completing the etching process, the undesired protection film 3 is peeled off to be removed by using a strong alkali. Here, the recessed portions 7 are formed on both front and back surfaces of the glass plate 1. Also, each of the recessed portions 7 has a preferred thickness D of about 5∼50µm depending on the strengthening layer 2 and the plate thickness T of the glass plate 1.

Subsequently, as shown in FIG. 2 (e), the glass plate 1 having the recessed portions 7 formed on both surfaces thereof is cut by machining. In the cutting process, a cutter such as a diamond cutter, a wheel cutter made of cemented carbide alloy, or a laser or a diamond tool or the like may be used as the cutter 8, and the glass plate 1 is cut along the centers of the recessed portions 7 to separate the glass plate 1 to manufacture a plurality of strengthened glasses 10, 10, .... Such an individual strengthened glass 10 is formed to have a shape in which a stepped portion 11 having a protruding cutting surface is formed at a periphery of the glass plate 1. If the width W of the stepped portion 11 is too long, the glass strength may become weak. If the width W of the stepped portion 11 is too short, the stepped portion 11 may be damaged while cutting so that the strength cannot be ensured. Therefore, the width W is preferred about 50∼500µm.

Finally, as shown in FIG. 2(f), the stepped portion 11 of the strengthened glass 10 may be subjected to a post-process in which the stepped portion 11 is ground. During the post-process, it is preferred that the strengthened glass 10 is fixed, and is ground while feeding a rotatable or rotating knife grinder 9 (9A) having a curved working surface to form an end surface of the stepped portion 11 in a cured shape. Preferably, a knife grinder having a fine granularity of about #800 is used as the rotatable knife grinder 9 (9A). Also, as an alternative to the rotatable knife grinder 9 (9A) for curving, a rotatable knife grinder 9 (9B) for light chamfering or a rotatable knife grinder 9 (9C) for forming a straight edge may be used to lightly chamfer or form the straight edge.

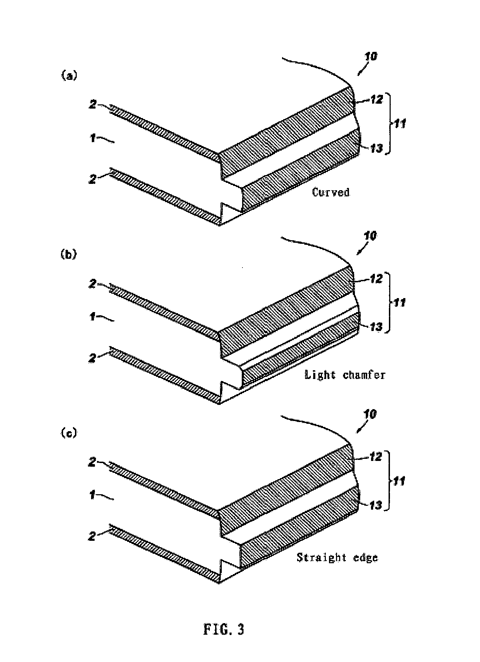

As shown in FIG. 3, the strengthened glass 10 manufactured as above has the stepped portion 11 with a specific width formed at the periphery of the glass plate 1. The stepped portion 11 has two side surfaces, an interior side surface 12 and an exterior side surface 13, however, since the two side surfaces are formed by different methods as described above, they have different surface states. That is, the interior side surface 12 is formed by the etching process, more particularly, it is a surface formed by etching the glass plate 1 with the chemical liquid such as hydrofluoric acid or the like, and thus, defects due to fracture such as micro-cracks or the like are substantially prevented. On the contrary, the exterior side surface 13 is formed by the cutter 8 such as the diamond cutter or the like, that is, it is a surface formed by machining, specifically, cutting the glass plate 1, and thus, fine defects such as micro-cracks or the like may be caused.

However, since stress against the strengthened glass 10 is absorbed by its application to both surfaces of the glass plate 1 (the surfaces on which the strengthening layers 2 are formed), fracture due to micro-cracks or the like does not occur as long as there is no micro-crack on the interior side surface or surfaces 12 of the stepped portion 11 adjacent to said both surfaces. Also, even if the exterior side surface 13 of the stepped portion 11 has micro-cracks or the like, as long as the micro-cracks or the like do not reach at least the exterior side surface or surfaces 12, the stress applied to both surfaces of the glass plate 1 will not accumulate at the micro-cracks or the like formed on the exterior side surface 13 spaced apart from the interior side surface 12, so it may be considered that there is no adverse effect on the strength. Therefore, according to the strengthened glass 10 manufactured by the present inventive method, damage such as fracture due to micro-cracks or the like can be substantially prevented, and the strength against stress can be ensured.

Also, according to the present inventive method, the time taken to perform the process for maintaining the strength of the strengthened glass 10 after cutting the glass plate 1 can be shortened. That is, the etching process is performed on all of the cutting surfaces (four side surfaces except for the front and back surfaces of glass plate 1) of the strengthened glass 10 in the related method, while in the case of the present inventive method, since only the recessed portions 7 formed at the cutting portions 4 are etched, and thus, the processing area according to the present invention is significantly less than that in the related method. Also, the exterior side surface 13 of the stepped portion 11 can be formed in a short time by cutting the glass plate 1 with the cutter 8 such as the diamond cutter or the like. Therefore, the process time for maintaining the strength is shortened greatly, and the production efficiency can be improved. Furthermore, since the exterior side surface 13 of the stepped portion 11 is formed by machining, it may be processed into any shape such as a curved shape shown in FIG. 3 (a), a lightly chamfered shape shown in FIG. 3 (b), a straight edge shape shown in FIG. 3 (c) and the like.

Also, although the glass plate 1 is separated by being cut after etching the glass plate 1 in the manufacturing method described above, a method of performing an etching process after cutting the glass plate 1 may be applied as an alternative to the manufacturing method described above.

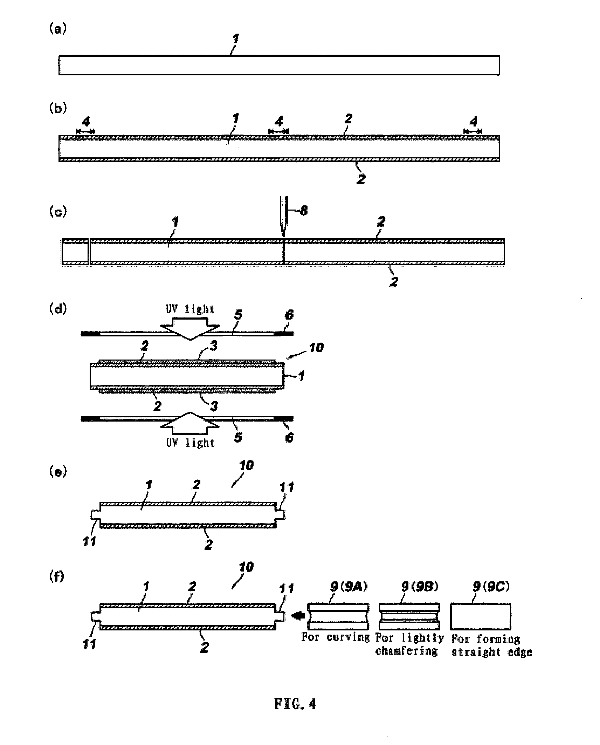

The method will be described with reference to FIG. 4. First, strengthening layers 2 shown in FIG. 4(b) are formed on both surfaces of a large glass plate 1 shown in FIG. 4(a). The forming method of the strengthening layers is the same as the method described above, in particular, may be an ion-exchange method or an air-cooled strengthening method. The strengthening layers 2 are formed on both surfaces of the glass plate 1.

Subsequently, as shown in FIG. 4 (c), the glass plate 1 having the strengthening layers 2 formed on both surfaces thereof is cut by machining. In the cutting process, a cutter such as a diamond cutter, a wheel cutter made of cemented carbide alloy, or a laser or a diamond tool or the like may be used as the cutter 8, and the glass plate 1 is cut along cutting portions 4 to be an outline of a product to separate the glass plate 1 to manufacture a plurality of strengthened glasses 10, 10, ....

Subsequently, as shown in FIG. 4 (d), a protection film 3 is formed in a region except for a periphery (having a width of about 50-500 µm) of the cut glass plate 1. The forming method of the protection film 3 is the same as the method described above, more particularly, a photolithography method, a method of attaching a protection sheet, or a method of printing a protection film may be used. The photolithography method may be performed by coating and drying a photoresist, covering a photo mask 6 formed with an exposure hole 5 in a region except for the periphery, and forming a pattern by exposure and development. Protection films 3 are formed on both surfaces of the glass plate 1.

Subsequently, as shown in FIG. 4 (e), an etching process is performed on the periphery of glass plate 1 which is not covered with the protection film 3. The etching process may be the same as described above, that is, it may be a wet etching process performed by contact with a chemical liquid such as hydrofluoric acid or the like. By means of this, the strengthening layer 2 and the glass plate 1 positioned at the periphery of the glass plate 1 are etched so that a stepped portion 11 having a protruding cutting surface is formed by performing the etching process on both surfaces of the glass plate 1. Here, the interior side surface 12 of the stepped portion 11 has a preferred thickness D of about 5∼50µm depending on the strengthening layer 2 and the plate thickness T of the glass plate 1.

Finally, as shown in FIG. 4 (f), a post-process of grinding an end surface of the stepped portion 11 to have a curved shape, or a light chamfer, or a straight edge may be performed.

The strengthened glass 10 manufactured according to the method described above also has a stepped portion 11 with a specific width formed at the periphery of the glass plate 1. The stepped portion 11 is formed to have the interior side surface 12 formed by etching and the exterior side surface 13 formed by machining, specially, cutting, and thus, according to the reason described above, damage such as fracture due to micro-cracks or the like can be substantially prevented and the strength against stress can be ensured.

### INDUSTRIAL APPLICABILITY

The strengthened glass according to the present invention may be used as a component of electronic apparatus having a touch panel such as smart phone, tablet-type terminal, vehicle navigation device or the like. For example, the strengthened glass may be used in an electrostatic capacity-type touch panel formed by stacking a transparent conductive film and an insulating film on one surface of the strengthened glass or as a cover glass having a decorative layer disposed at the periphery of the strengthened glass.

## Claims

1. A method of manufacturing a strengthened glass (10), by which a large glass plate (1) is separated to manufacture a plurality of strengthened glasses (10), comprising:
a step of forming strengthening layers (2) on both surfaces of the glass plate;
a step of mechanically cutting the glass plate having the strengthening layers formed thereon;
a step of forming protection films (3) in a region except for a periphery of the cut glass plate; and
a step of forming a stepped portion (11) by etching both surfaces of the glass plate at the periphery of the glass plate not covered by the protection films, , wherein both the strengthening layer and the glass plate positioned at said periphery are etched, wherein the stepped portion has
- an interior side surface (12) adjacent to the strengthening layers and formed by an etching process; and
- an exterior side surface (13) formed by mechanical cutting thereby forming a protruding cutting surface of the stepped portion.

2. The method of manufacturing the strengthened glass of claim 1 , further comprising a step of grinding an exterior side surface of the stepped portion to have a curved shape, a light chamfer, or a straight edge after the step of forming the stepped portion.

3. The method of claim 1 or 2, further comprising:
- providing a touch panel comprising the strengthened glass; and
- disposing a conductive film and an insulating film on the glass plate of the strengthened glass.

## Patentansprüche

1. Verfahren zur Herstellung von verstärktem Glas (10), bei dem eine große Glasplatte (1) zur Herstellung einer Mehrzahl verstärkter Gläser (10) aufgeteilt wird, umfassend:
- einen Schritt des Bildens von Verstärkungsschichten (2) auf beiden Oberflächen der Glasplatte;
- einen Schritt des mechanischem Schneidens der Glasplatte mit den darauf gebildeten Verstärkungsschichten;
- einen Schritt des Bildens eines Schutzfilms (3) in einem Bereich abseits des Randbereichs der geschnittenen Glasplatte; und
- einen Schritt des Bildens eines abgestuften Bereichs (11) durch Ätzen beider Seiten der Glasplatte am Randbereich der Glasplatte, der nicht durch den Schutzfilm bedeckt ist, wobei sowohl die Verstärkungsschicht als auch die Glasplatte am Randbereich geätzt werden, wobei der abgestufte Bereich
- eine innere Seitenfläche (12) benachbart zu den Verstärkungsschichten und geformt durch den Ätzungsvorgang; und
- eine äußere Seitenfläche (13) geformt durch das mechanische Schneiden hat, wodurch eine hervorstehende Schnittstelle des abgestuften Bereichs gebildet wird.

2. Verfahren zur Herstellung von verstärktem Glas gemäß Anspruch 1, weiter umfassend einen Schritt des Schleifens einer äußeren Seitenfläche des abgestuften Bereichs, so dass diese eine geschwungene Oberfläche, eine leichte Fase oder eine scharfe Kante nach dem Schritt des Bildens des abgestuften Bereichs hat.

3. Verfahren nach Anspruch 1 oder 2, weiter umfassend:
- das Bereitstellen einer Berührungskonsole umfassend das verstärkte Glas; und
- das Anordnung eines Leitfähigkeitsfilms und eines Isolierfilms auf der Glasplatte des verstärkten Glases.

## Revendications

1. Procédé de fabrication de verre renforcé (10), par lequel une grande plaque de verre (1) est divisée pour fabriquer une pluralité de verres renforcés (10), comprenant :
une étape de formation de couches de renforcement (2) sur les deux surfaces de la plaque de verre ;
une étape de découpe mécanique de la plaque de verre sur laquelle les couches de renforcement sont formées ;
une étape de formation de films de protection (3) sur une zone, excepté sur une périphérie de la plaque de verre coupée ; et
une étape de formation d'une partie étagée (11) par gravure des deux surfaces de la plaque de verre au niveau de la périphérie de la plaque de verre non recouverte par les films de protection, dans laquelle à la fois la couche de renforcement et la plaque de verre positionnées au niveau de ladite périphérie sont attaquées, dans laquelle la partie étagée comporte :
une surface latérale interne (12) adjacente aux couches de renforcement et formée par un procédé de gravure ; et
une surface latérale externe (13) formée par découpe mécanique formant ainsi une surface de découpe en saillie de la partie étagée.

2. Procédé de fabrication d'un verre renforcé selon la revendication 1, comprenant en outre une étape de meulage d'une surface latérale externe de la partie étagée de manière à obtenir une forme courbe, un léger chanfrein, ou un bord droit après l'étape de formation de la partie étagée.

3. Procédé selon la revendication 1 ou 2, comprenant en outre :
la préparation d'un panneau tactile comprenant le verre renforcé ; et
l'agencement d'un film conducteur et d'un film isolant sur la plaque de verre du verre renforcé.
